(19) **Europäisches Patentamt**

**European Patent Office**

**Office européen des brevets**

(11) **EP 0 867 987 B1**

(12) **EUROPEAN PATENT SPECIFICATION**

(45) Date of publication and mention
of the grant of the patent:
**12.05.2004 Bulletin 2004/20**

(51) Int Cl.⁷: **H01S 3/09**

(21) Application number: **98302257.5**

(22) Date of filing: **25.03.1998**

(54) **Unidirectional optical amplifier**

Unidirektionaler optischer Verstärker

Amplificateur optique unidirectionnel

(84) Designated Contracting States:
**DE**

(30) Priority: **25.03.1997 JP 7114797**

(43) Date of publication of application:
**30.09.1998 Bulletin 1998/40**

(73) Proprietor: **Kanazawa University**
**Kanazawa City, Ishikawa Pref. (JP)**

(72) Inventor: **Yamada, Minoru**
**Kanazawa City, Ishikawa Pref. (JP)**

(74) Representative: **Whalley, Kevin**
**MARKS & CLERK,**
**57-60 Lincoln's Inn Fields**
**London WC2A 3LS (GB)**

(56) References cited:
**US-A- 4 122 372          US-A- 5 268 693**

• **YARIV A ET AL: "Amplification of radiation by**
**relativistic electrons in spatially periodic optical**
**waveguides" OPTICS COMMUNICATIONS, FEB.**
**1978, NETHERLANDS, vol. 24, no. 2, pages**
**233-236, XP002124083 ISSN: 0030-4018**

## Description

1. Field of the Invention

The present invention relates to an unidirectional optical amplifier capable of applying many fields such as electrical engineering, electronic engineering, information engineering and opto-electronics to amplify the light only in one direction.

2. Prior Art

As prior art for effecting optical amplifying, there are a laser, a traveling-wave tube, and a propagating wave amplification of light due to an interband electron transition, the various kinds of trials that unidirectional amplification of light was going to be realized using these devices.

The laser is typical opto-electronics element or opto-electronics device for generating light and for amplifying light. The direction of light to be amplified is possible reverse, and both of forward wave and backward wave are amplified. Accordingly, when the emitted light is reflected at the surface of a lens, optical fiber or optical disk or the like, and is incident on the laser as a return light again, this return light has also amplified. Therefore, oscillating characteristic and amplifying characteristic of a laser are deteriorated, and excess noises have generated.

As countermeasures of the above malfunction suggested by the present, the typical method is a technique that reentering of return light is generally prevented by providing at output side of a laser an isolator for passing light through in the unidirectional direction. It is only possible for optical isolator to make magnetic material with bulk shape as main material, and the price thereof is expensive, so that the utilizing range thereof may be limited. On this account, the optical isolator is utilized for fundamental study in optical field and in optical fiber communication system of large capacity, but the utility required as small size and cheap price such as optical disk technology can not utilize the optical isolator, and thus characteristic deterioration and noise generation due to the above return light become a technical obstacle in case of adopting the laser.

Also, there is provided a system for performing high-speed information processing by light by integrating the light generating section, amplifier section or modulating section or the like, which utilize the laser, with each other as an optical integrated circuit, but in this system, the light returns back from forward section to backward section, so that a problem that a composition as optical circuit having composite function cannot be completed, is caused.

Moreover, the traveling-wave tube is an unidirectional electron tube having the highest operable frequency over the upper limit of operable frequency of a usual electron tube having unidirectional electronic functionality or a transistor (about 1000 MHz), but this traveling-wave tube makes electromagnetic wave propagate by using a delayed transmission line made by metal, electron beam emitted from an electron gun gives energy to this electromagnetic wave and the electromagnetic wave is amplified when speed of electron beam and propagation speed of the electromagnetic wave are coincident with each other, other electromagnetic wave component propagated in the reverse direction is not amplified. However, the higher the frequency, the shorter the wavelength, so that the upper limit of usable frequency of traveling-wave tube is determined by manufacturing technique for the metal of transmission path, so that the traveling-wave tube can not be utilized with frequency of dozens of GHz or more (wavelength; several cm or less). Accordingly, fabrication of the traveling-wave tube capable of applying the light having a wavelength of less than 1 μm exceed a limit of current manufacturing technique far, and is impossible at this time.

Moreover, as prior art of progress wave amplification of light by interband electron transition, there is a try of unidirectional amplification of light by using semiconductor laser performing the generation and the amplification of light by electron transition from conduction band to valence band in the semiconductor, and by counting value of momentum $h\beta/2\pi$ (where, h is Planks constant, $\beta$ is wave number of light) of light that is ignored in almost cases because a value is small usually. In this case, since scattering of an electron is extremely large, clear unidirectional amplifying action has not been confirmed.

SUMMARY OF THE INVENTION

The present invention has for its object to provide an unidirectional optical amplifier capable of performing the optical amplifying that is not influenced by the return light.

To this end, according to a first aspect of the present invention, there is provided an unidirectional optical amplifier comprising an optical dielectric waveguide including an amplifier section for amplifying light in one direction by utilizing energy level higher than the Fermi level in an emissive section and having high refraction index for leading light through said amplifier section from a light input terminal to a light output terminal and a straight electron beam transit section extended in electron beam transit direction, and an emissive section for emitting an electron beam in the electron beam transit section and an electron absorption section for absorbing the electron beam travelling through the electron beam transit section, the electron beam transit section being constituted so that effective mass of an electron in the amplifier section becomes small, and the optical dielectric waveguide and the electron beam transit section being arranged in such a manner that the wave number of the light in the amplifier section becomes large and the electric field component of the light is generated in the electron beam transit direction so that the electrons emitted by the emissive section impart energy to the light propagating in the amplifying section.

According to this aspect of the present invention, the electron beam transit section of the amplifier section for amplifying light in one direction by utilizing energy level higher than the Fermi level, is constituted by a materials that effective mass of an electron seems to become small, and the optical dielectric waveguide of the amplifier section and the electron beam transit section is arranged in such a manner that wave number of light in aid amplifier section is made large and the electric field component of light seems to generate.

According to this aspect of the present invention, effective mass of an electron in the amplifier section is made small, and wave number of light is made large (in other words, a propagation speed of light in electronic transit direction is made small), so that the unidirectional optical amplifier for realizing the optical amplifying that is not influenced by the return light, can be provided.

In a preferred embodiment of the present invention, the amplifier section is so constructed that the optical dielectric waveguide is wound on and around the electron beam transit section in spiral shape.

According to the preferred embodiment of the present invention, the optical dielectric waveguide for constituting the amplifying section is wound on and around at its periphery the electron beam transit section in spiral shape.

According to the preferred embodiment of the present invention, the optical dielectric waveguide is wound on and around the electron beam transit section, so that wave number of light in the amplifier section is made large by this constitution and high refraction indexing of the optical dielectric waveguide, and the electric field component of light can be generated in the electron beam transit direction.

In a preferred embodiment of the present invention, the amplifier section is so constructed that the optical dielectric waveguide and the electron beam transit section are intersected orthogonally to each other at plural portions.

According to the preferred embodiment of the present invention, the optical dielectric waveguide and the electron beam transit section which constitute the amplifier section are intersected orthogonally to each other at plural portions thereof.

According to the preferred embodiment of the present invention, the optical dielectric waveguide and the electron beam transit section are intersected orthogonally to each other at plural portions thereof, so that wave number of light in the amplifier section is made large by this constitution and high refraction indexing of the optical dielectric waveguide, and the electric field component of light can be generated in the electron beam transit direction.

In a preferred embodiment of the present invention, the amplifier section is so constructed that the optical dielectric waveguide and the electron beam transit section are intersected with the same set angle to each other at plural portions.

According to the preferred embodiment of the present invention, the optical dielectric waveguide and the electron beam transit section which constitute the amplifier section, are intersected with the same set angle to each other at plural portions.

According to the preferred embodiment of the present invention, the optical dielectric waveguide and the electron beam transit section are intersected with the same set angle to each other at plural portions, so that wave number of light in the amplifier section is made large by this constitution and high refraction indexing of the optical dielectric waveguide, and the electric field component of light can be generated in the electron beam transit direction.

In a preferred embodiment of the present invention, the amplifier section is so constructed that the optical dielectric waveguide is arranged in parallel to the electron beam transit section so as to extend the electron beam transit section through the center portion of the optical dielectric waveguide.

According to the preferred embodiment of the present invention, the optical dielectric waveguide is arranged in parallel to the electron beam transit section so that the electron beam (transit section) is extended through the center portion of the optical dielectric waveguide.

According to the preferred embodiment of the present invention, the optical dielectric waveguide is arranged in parallel to the electron beam transit section in such a manner that the electron beam transit section is extended through the center portion of the optical dielectric waveguide, so that wave number of light in the amplifier section is made large by the high refraction indexing of the optical dielectric waveguide, and the electric field component of light can be generated in the electron beam transit direction.

In a preferred embodiment of the present invention, the electron beam transit section is constituted from II-VI group semiconductor such as ZnSe, ZnTe, ZnO, ZnS, CdSe, CdTe, CdS and mixed crystal thereof or an insulating material such as $CaF_2$, $SrF_2$, $BaF_2$ in case of using it for visible-light region from near-infrared region, and from III-V group semiconductor such as InP, InSb, InAs, GaP, GaSb, GaAs and mixed crystal thereof in case of using it for infrared region.

According to the preferred embodiment of the present invention, the electron beam transit section is constituted from II-VI group semiconductor such as ZnSe, ZnTe, ZnO, ZnS, CdSe, CdTe, CdS and mixed crystal thereof or an insulating material such as $CaF_2$, $SrF_2$, $BaF_2$ in case of using it for visible-light region from near-infrared region, and from III-V group semiconductor such as InP, InSb, InAs, GaP, GaSb, GaAs and mixed crystal thereof in case of using it for infrared region.

According to the preferred embodiment of the present invention, the electron beam transit section is constituted by any one of the above materials, even in case of using light of visible-light region from near-infrared region and light of infrared region, effective mass of an electron in the amplifier section can be made small.

In a preferred embodiment of the present invention, the optical dielectric waveguide is constituted from II-VI group semiconductor such as ZnSe, ZnTe, ZnO, ZnS, CdSe, CdTe, CdS and mixed crystal thereof or III-V group semiconductor such as GaN, GaP, AlAs and mixed crystal thereof in case of using it for visible-light region fromnear-infrared region, and from III-V group semiconductors such as InP, InSb, InAs, GaP, GaSb, GaAs and mixed crystal thereof or IV group semiconductor of Si, Ge or the like, in case of using it for infrared region.

According to the preferred embodiment of the present invention, the optical dielectric waveguide is constituted from II-VI group semiconductor such as ZnSe, ZnTe, ZnO, ZnS, CdSe, CdTe, CdS and mixed crystal thereof or III-V group semiconductor such as GaN, GaP, AlAs and mixed crystal thereof in case of using it for visible-light region from near-infrared region, and from III-V group semiconductors such as InP, InSb, InAs, GaP, GaSb, GaAs and mixed crystal thereof or IV group semiconductor of Si, Ge or the like, in case of using it for infrared region.

According to the preferred embodiment of the present invention, the optical dielectric waveguide is constituted by any one of the above materials, even in case of using light of visible-light region from near-infrared region and light of infrared region, wave number of light in the amplifier section can be made large.

In a preferred embodiment of the present invention, a unidirectional optical amplifier comprises a multi-stage construction arranged by connecting in cascade several unidirectional optical amplifiers as claimed in any one of claims 1 to 7.

According to the preferred embodiment of the present invention, the unidirectional optical amplifier of multi-stage construction is constructed by connecting in cascade several unidirectional optical amplifiers as claimed in any one of claims 1 to 7.

According to the preferred embodiment of the present invention, the unidirectional optical amplifier of multi-stage construction is constructed by connecting in cascade several unidirectional optical amplifiers as claimed in any one of claims 1 to 7, so that the real usable amplification degree can be achieved.

## BRIEF DESCRIPTION OF THE DRAWING

Fig. 1 is a principle view showing a basic structure of a unidirectional optical amplifier of the first embodiment of the present invention.

Fig. 2 is an explanatory view explaining operation of a constitution of the whole unidirectional optical amplifier of the first embodiment according to the present invention.

Fig. 3 is an explanatory view explaining operation of other constitution of the whole unidirectional optical amplifier of the first embodiment according to the present invention.

Fig. 4 is an explanatory view explaining operation of further constitution of the whole unidirectional optical amplifier of the first embodiment according to the present invention.

Fig. 5 is a cross sectional view showing a constitution of amplifier section of the unidirectional optical amplifier of the first embodiment according to the present invention.

Fig. 6a is a cross sectional view showing other constitution of amplifier section of the unidirectional optical amplifier of the first embodiment according to the present invention.

Fig. 6b is a cross sectional view showing ocher constitution of amplifier section of the unidirectional optical amplifier of the first embodiment according to the present invention.

Fig. 7a is a cross sectional view showing further constitution of amplifier section of the unidirectional optical amplifier of the first embodiment according to the present invention.

Fig. 7b is a cross sectional view showing further constitution of amplifier section of the unidirectional optical amplifier of the first embodiment according to the present invention.

Fig. 8a is a cross sectional view showing further constitution of amplifier section of the unidirectional optical amplifier of the first embodiment according to the present invention.

Fig. 8b is a cross sectional view showing further constitution of amplifier section of the unidirectional optical amplifier of the first embodiment according to the present invention.

Fig. 9 is an explanatory view showing a unidirectional optical amplifier of the multi-level construction constituted by cascade-connecting a plurality of unidirectional optical amplifiers of the first embodiment according to the present invention.

## DESCRIPTION OF PREFERRED EMBODIMENT

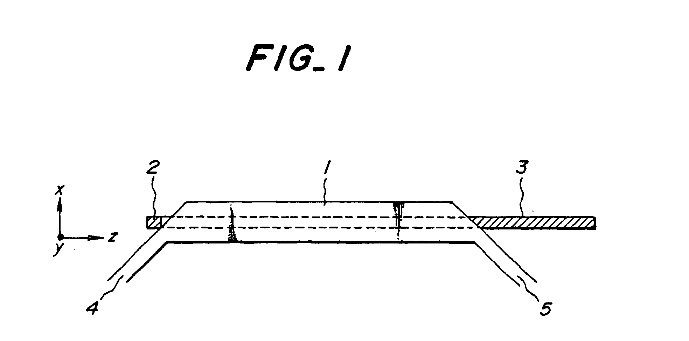

Hereinafter, an embodiment of the present invention is explained in detail with reference to the drawings. Fig. 1 shows a principle view showing a basic structure of the unidirectional optical amplifier of the first embodiment of present invention. As shown in Fig. 1, a unidirectional optical amplifier of this embodiment comprises an amplifier section 1, an electron emitting section 2 coupled to a left edge portion of the amplifier section 1, an electron absorption section 3 coupled to a right end portion of the amplifier section 1 so as to make it in coaxial relation in electron beam transit direction (in z axis direction shown in Fig. 1), and a light input terminal 4 is formed at the left and lower end portion of the amplifier section 1, and a light output terminal 5 is formed at the right and lower end portion of the amplifier section 1.

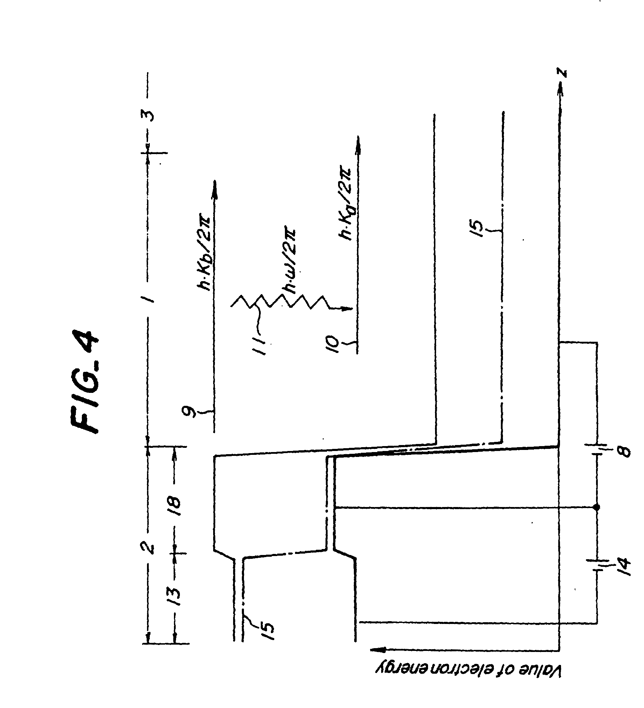

Fib. 2 to Fig. 4 show explanatory views explaining operation of constitution of the whole unidirectional optical amplifier of the first embodiment, in which an abscissa axis shows z axis of figure 1, and an ordinate axis shows an electronic energy value.

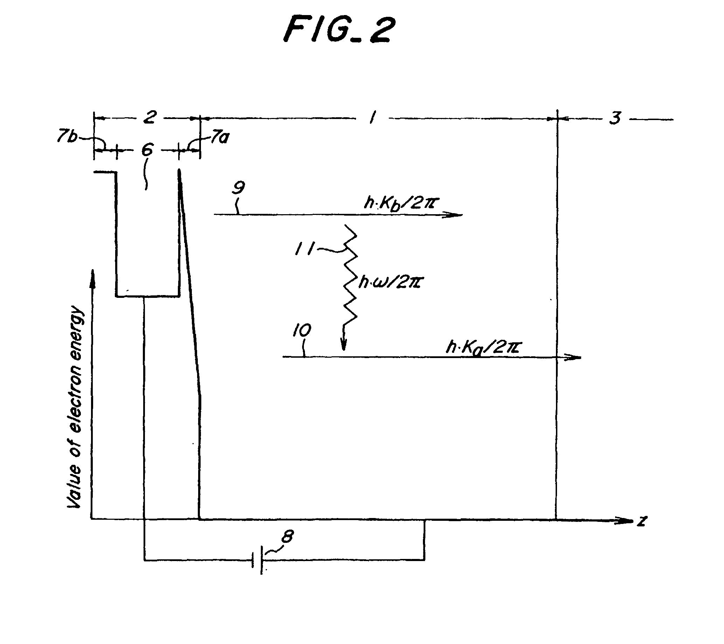

In the constitution shown in Fig. 2, the electron emitting section 2 comprises a potential barrier 7b, an emitting electrode 6, a potential barrier 7a in z axis direction, successively. The emitting electrode 6 of this electron emitting section 2 consists of metal of Au, Ag, Al, $CoSi_2$ or the like, and potential barriers 7a, 7b consist of insulating material of $SiO_2$, $AlO_3$, $CaF_2$. The amplifier section 1 and the electron absorption section 3 are constituted by a semiconductor material mentioned later.

In Fig. 2, when negative voltage 8 is applied to the electron emitting section 2 from the amplifier section 1, a potential of electron emitting section 2 is increased so that a potential barrier 7a becomes thin. Accordingly, an electron beam 9 of energy $W_b$, momentum $hK_b/2\pi$ (Plank's constant) is emitted in the direction from electron emitting section 2 to amplifier section 1 by tunnel effect. An electron of this electron beam imparts energy to a light 11 of wave number β with an angular frequency ω so as to satisfy following relations, and then damps and becomes to an electron beam 10 of energy $W_a$ and momentum $hK_a/2\pi$.

$$W_b - W_a = h \cdot \omega/2\pi \qquad (1)$$

$$K_b - K_a = \beta \qquad (2)$$

This damped electron beam 10 is absorbed at the electron absorption section 3.

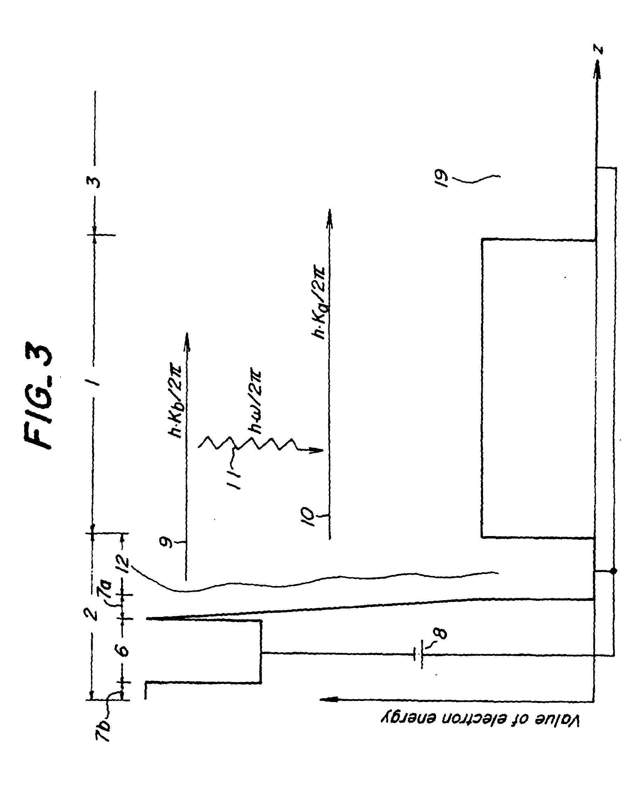

In the constitution shown in Fig. 3, the electron emitting section 2 comprises the potential barrier 7b, the emitting electrode 6, the potential barrier 7a and a potential holding electrode 12 in z axis direction, successively. The electron absorption section 3 consists of metal, and forms an electronic absorption electrode 19. The potential holding electrode 12 is arranged to apply to the negative voltage 8 between the emitting electrode 6 and the amplifier section 1. This electron emitting section 2 and the potential holding electrode 12 of the emitting electrode 6 of this and the electron absorption section 3 consist of metal of Au, Ag, Al, $CoSi_2$ or the like, and the potential barriers 7a, 7b consist of insulating material of $SiO_2$, $AlO_3$, $CaF_2$. Also, the amplifier section 1 consists of insulating material mentioned later and semiconductor materials.

In the constitution shown in Fig. 3, principle of electronic emissive action from the electron emitting section 2 and the optical amplifying in amplifier section 1 is same as that of the constitutional embodiment shown in Fig. 2. In the constitution shown in Fig. 3, however, the point that the damped electron beam 10 is absorbed with an electronic absorption electrode 19 of the electron absorption section 3, and returned to the electronic maintenance electrode 12, is different from the construction shown in figure 2.

In the constitution shown in Fig. 4, the electron emitting section 2 is constituted by arranging a semiconductor junction consisted of an n type semiconductor 13 and a p type semiconductor 18 in z axis direction and the amplifier section 1 and the electron absorption section 3 consist of an i type semiconductor. In this constitution, a negative voltage 8 is applied to the p type semiconductor 18 from the amplifier section 1, and then, a negative voltage 14 is applied to the n type semiconductor 13 from the p type semiconductor 18. In Fig. 4, a dash-and-dot line 15 shows a distribution state of Fermi level. An electron is injected to the p type semiconductor 18 from the n type semiconductor 13, and emitted to the amplifier section 1 as an electron beam 9 and then damped after being amplified the light 11 as in the same as in Fig. 2, and finally absorbed with electron absorption section 3 as an electron beam 10.

Optical amplifying action at the above amplifier section 1 is analyzed theoretically by applying the density matrix method being one of analysis technique of quantum mechanics to a model shown in Figs. 2 - 4, and thus a gain constant g of the light may be expressed by following equation.

$$g \approx \xi \sqrt{\frac{\mu 0}{\varepsilon_0}} - \frac{\varepsilon^2}{\pi} \frac{\lambda c <Nb>}{n_{eff}^3 \, \Delta \, W} \qquad (3)$$

wherein ξ is ratio of the part that intersects the electron beam in whole distributions of light, $\mu_0$ is a permeability in vacuum, $\varepsilon_0$ is a dielectric constant in vacuum, e is a charge of an electron, λ is a wavelength of light, c is light speed in vacuum, $<N_b>$ is an energy spread width of electron beam and an $n_{eff}$ is an efficiency of refraction index.

Also, supporting that effective mass of an electron at the amplifier section 1 is m, and a charge of an electron is - e, an applying voltage 8 necessary for the amplification may be expressed by the following equation.

$$V_e \approx \frac{m}{2e} \left(\frac{c}{n_{eff}}\right)^2 \qquad (4)$$

Moreover, a length L of the amplifier section 1 is limited by energy relaxation time τ of an electron, and may be expressed by following equation.

$$L \leq \tau C/n_{eff} \qquad (5)$$

Therefore, amplification factor A of the amplifier may be expressed by the following equation.

$$A = \exp(gL) \qquad (6)$$

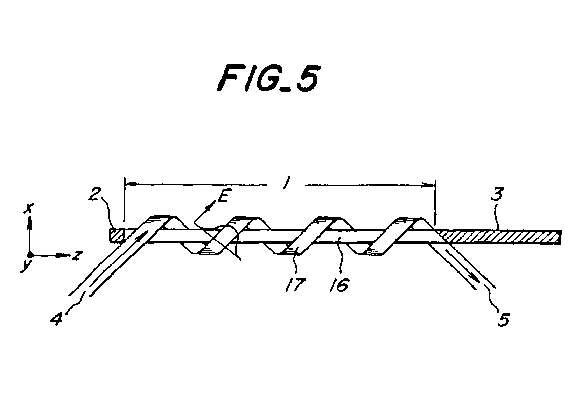

In order to realize optical amplifying while satisfying the above equations (1), (2), it is necessary to make effective mass m of an electron in the amplifier section small and wave number of light $\beta = n_{eff}\omega/c$ is made large by high refractive index of the optical dielectric waveguide and constitution of the amplifier section 1, that is, it is necessary to make propagation speed c/$n_{eff}$ of light in z direction being an electronic transit direction. (When effective mass m of an electron becomes large, the equations (1) , (2) can not be satisfied so long as equivalent refraction index $n_{eff}$ is not made large, so that length L of the amplifier section 1 in the equation (5) becomes short, and thus the amplification factor in the equation (6) becomes small). Moreover, it is necessary to cause electric field component of light in a z direction being an electronic transit direction, so that if the electric field component of light is not caused, the light is not amplified. The light in reverse direction is not amplified, since a wave number of light becomes -$\beta$ and does not satisfy the equation (2). Hereinafter, an embodiment of the constitution in which the speed of light is made decreased and the electric field component in z direction is obtained, is explained with reference to Figs. 5 to 8.

In the constitution shown in Fig. 5, the amplifier section 1 is constituted by arranging or winding the optical dielectric waveguide 17 of high refraction index around the electron beam transit section 16 in spiral shape. Generally, the optical dielectric waveguide serves to wave-guide in such a manner that the electric field E of light is distributed so as to converge the light on the center of the waveguide, but the light is not completely closed in the waveguide path so that the light begins to ache to the outside of waveguide path. Therefore, in this embodiment of the construction, the electric field E of light is distributed so as to soak from optical dielectric waveguide 17 as shown in the schematic diagram of Fig. 5, and is intersected to the electron beam slantingly, so that the electric field component of z direction generates in z direction and thus the electric field E of light is amplified.

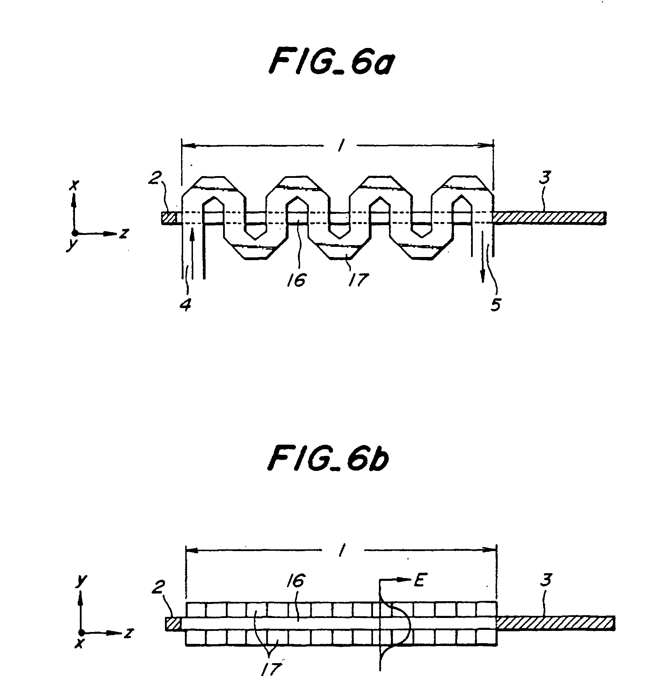

In the constitution shown in Figs. 6 (a), (b), the amplifier section 1, as shown in Fig. 6 (a) , is constituted in such a manner that the optical dielectric waveguide 17 of high refraction index and the electron beam transit section 16 are intersected orthogonally with each other at several portions. As shown in a cross-sectional view in y direction of Fig. 6 (b) , the electron beam transit section 16 is arranged in order to be sandwiched between the optical dielectric waveguides 17. In this embodiment, the light is propagated in the optical dielectric waveguide 17 in a zigzag form, so that propagation speed of light in z direction becomes decreased and thus the electric field component in z direction also generated. Moreover, by making electron beam transit section 16 thin enough compared with wavelength of light, a distribution of electric field E of light becomes strong at the electron beam transit section 16 as shown in schematic diagram of Fig. 6 (b) , and thus can be amplified.

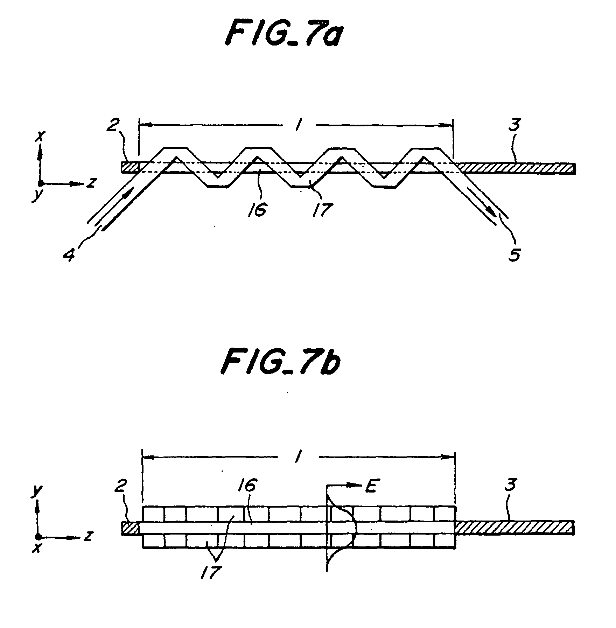

In the constitution shown in Figs. 7 (a), (b), the amplifier section 1 is constituted in such a manner that the optical dielectric waveguide 17 has a zigzag section as shown in Fig. 7 (a) , and thus the optical dielectric waveguide 17 and the electron beam transit section 16 are intersected at several portions with each other with the same set angle. Optimum intersectional angle of the optical dielectric waveguide 17 for the electron beam transit section 16 extending in z direction is determined based on refraction index and width of the optical dielectric waveguide 17, width of the electron beam transit section 16 and magnitude of the applying voltage 8. In this embodiment, folded portion of the optical dielectric waveguide 16 was decreased than that of the above embodiment shown in Figs. 6(a),(b),so that unnecessary light reflection and scattering loss at the folded portion can be decreased.

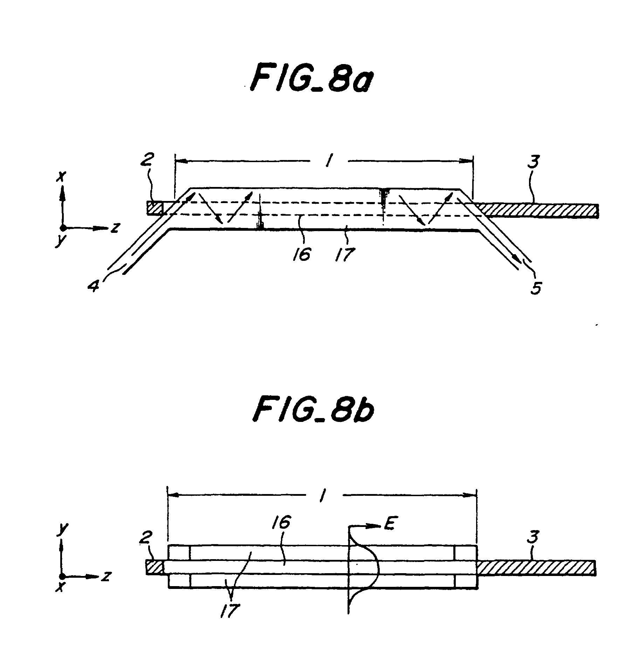

In the constitution shown in Figs. 8(a), (b), the amplifier section 1 is constituted in such a manner that the optical dielectric waveguide 17 is constructed in width wider than the electron beam transit section 16 as shown in Fig. 8 (a), and that as shown in Fig. 8(b), the optical dielectric waveguide 17 is arranged in parallel to the electron beam transit section 16 so as to extend it through the center portion of the optical dielectric waveguide 17. In this case, the light is made in a meandering form by a reflection at the side of optical dielectric waveguide 17 (the trace thereof is shown in Fig. 8(a) by an arrow).

In the above respective constitutions, as materials of the electron beam transit section 16, following three conditions must be satisfied.

(1) Effective mass of electron is small.
(2) Energy of parabolic functional shape extends to upper level portion of conduction band.
(3) Loss of light is few.

These conditions are considered. It is preferable that as the electron beam transit section, in case of using the region from near-infrared region to the visible-light region, II-VI group semiconductor such as ZnSe, ZnTe, ZnO, ZnS, CdSe, CdTe, CdS and mixed crystal thereof or an insulating material such as $CaF_2$, $SrF_2$, $BaF_2$, is utilized, and in case of using the infrared region, III-V group semiconductor such as InP, InSb, InAs, GaP, GaSb, GaAs and mixed crystal thereof, is utilized. The above materials are also utilized as a material of the electron absorption section 3.

Moreover, as a material of the optical dielectric waveguide 17, materials having high refraction index of lossless must be utilized. This condition is considered. It is preferable that as the optical dielectric waveguide 17, in case of using the region from near-infrared region to the visible-light region, II-VI group semiconductor such as ZnSe, ZnTe, ZnO, ZnS, CdSe, CdTe, CdS and mixed crystal thereof or III-V group semiconductor such as GaN, GaP, AlAs and mixed crystal thereof, is utilized, and in case of using the infrared region, III-V group semiconductors such as InP, InSb, InAs, GaP, GaSb, GaAs and mixed crystal thereof or IV group semiconductor of Si, Ge or the like, is utilized.

The feature effecting an influence to a performance of the optical amplifier in this embodiment most greatly is a selection of materials of the electron beam transit section 16, and in order to obtain larger amplification factor, the materials that energy of parabolic functional shape extends to upper level portion of conduction band, must be selected. However, a certain or constant amplification factor is obtained with only one stage of the optical amplifiers, because the existing materials do not completely meet these demands.

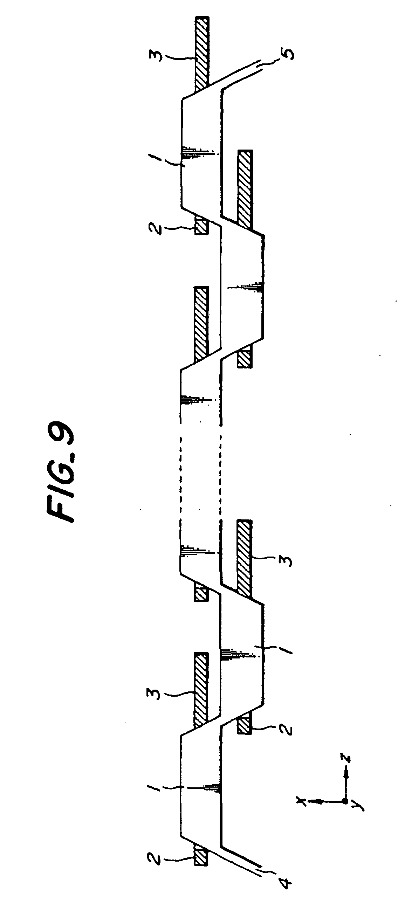

Then, in order to obtain large amplification factor, as shown in Fig. 9, plural of the optical amplifier are connected in cascade to form a unidirectional optical amplifier of multi-stage configuration. In this case, as a constitution of the amplifier section 1, the electron emitting section 2, and the electron absorption section 3, it is assumed that either one of Figs. 2 to 4, and either one of Figs. 5 to 8 may be combined.

In the unidirectional optical amplifier of multi-stage construction of Fig. 8, if the light is inputted from the light input terminal 4 of the shown left edge, this light is outputted from the light output terminal 5 of the shown right edge. Whole amplification factor A in case of cascade-connecting the optical amplifiers of N stage (N is a natural number) is expressed by following equation.

$$A = \exp(NgL) \qquad (7)$$

An operation of this embodiment is explained hereinafter.

When a negative voltage 8 (cf. Figs. 2 to 4) is applied between the amplifier section 1 of the unidirectional optical amplifier and the electron emitting section 2 shown in Fig. 1, and the light is entered into the light input terminal 4, the amplified light can be obtained from the light output edge 5. In this case, any light of the coherent light and the incoherent light can be amplified. Also, a certain material is selected from the above described materials, and either one of Figs. 2 to 4 and either one of Figs. 5 to 8 are combined to form the amplifier section 1, the electron emitting section 2 and the electron absorption section 3, so that unidirectional amplification of light can be realized at various kinds of wavelengths. In this case, also, the wavelength of light to be amplified is determined by band gap of materials of electron beam transit section and energy level structure in the conduction band.

The unidirectional optical amplifier in this embodiment realizing the above unidirectional amplification of the light is different from the conventional technique in the following points.

Firstly, this embodiment shows an element or a device for amplifying light only in one direction and is essentially different from "a laser" which is a conventional technique for performing a reversible amplification in both directions.

Secondly, optical amplifying operation in this embodiment is a phenomenon foreseen by new theoretical analysis by the present inventor. By this theoretical analysis, the present inventor suggests a theory different from the conventional technique and other designs fundamentally.

Thirdly, the amplifier section 1 of this embodiment uses an electron in a solid body and serves to amplify the light in one direction by utilizing energy level excited highly more enough than Fermi level at thermal equilibrium, and thus, is greatly different from that "the traveling-wave tube" being conventional technique utilizes an electron in a vacuum. Moreover, it is principally different that the "progress wave amplification of light by the interband transition" being conventional technique tried as fundamental researches uses an electron of Fermi level neighborhood, and is the interband transition from conduction band to valence band.

Fourthly, the present embodiment performs the unidirectional amplification of light by utilizing energy level excited highly more fully than Fermi level, so that interference by phase scattering of the electron is hard to subject and thus light amplification is possible. This phenomenon is greatly different from the fact that the above "progress wave amplification of light by the interband transition" was not realized by an obstacle due to phase scattering of electron. Moreover, currently, realization of functional element utilizing all kinds of "electronic wave interference" is examined scientifically, but these functional elements are easy to be interfered with by electronic phase scattering, so that interaction between electron and electromagnetic field is generated only within a range that the electronic phase scattering do not occur. On the contrary thereto, unidirectional amplifier of light according to this embodiment is different from these functional elements and has a characteristic which is determined by energy relaxation time, so that the range in which the interaction occurs between electron and electromagnetic field, can be extended.

Fifthly, this embodiment utilizes the dielectric transmission path for transmission of light (electromagnetic wave) and thus it is greatly different from the fact that the "traveling-wave tube" requires electromagnetic wave propagation by metal transmission path and that "electromagnetic wave is amplified by an electric current induced in the metal transmission path" are proved theoretically. In this embodiment, even if there is not metal transmission path, the fact that light is directly amplified by electron beam, is proved theoretically based on quantum mechanics, so that metal transmission path is not required, principally.

As is explained above, according to the present embodiment, unidirectional optical amplification which is not realized by the current time, can be realized. The unidirectional optical amplifier according to the present embodiment corresponds to be, so to say, equivalent to a transistor in optical frequency domain, so that when unidirectional optical amplifier is provided, in addition to continuous advance of the current telecommunicating technique, the optical metering technique, and the optical memory technique, a leap advance of a field of optical electronics, electronic electrical engineering, and information electrical engineering can be anticipated.

For example, when the unidirectional optical amplifier according to the present invention is applied to light source for optical fiber communication and is applied to various light measuring apparatus, even if an optical isolator is not used, an obstacle of the reflected return light does not occur. Moreover, when the unidirectional optical amplifier according to the present invention is applied to an optical pick-up in an optical disk, influence of the reflected return light disappear, and can maintain optical signal of high quality. Also, if the amplifying conditions are changed properly, an optical modulator and an optical switch may be formed and thus application to much optical functional elements is possible.

The greatest advantage by realization of unidirectional optical amplifying is that the circuit composition using optical signal can be possible, so that optical functional element of every kind such as an optical oscillator, an optical amplifier, an optical modulator, an optical switch, and an optical memory can be constituted integrally as an optical integrated circuit. There was the design why optical integrated circuit was going to be realized from the past, but this design was not progressed. This problem is solved by inserting unidirectional optical amplifier of this embodiment, and function separation of each element becomes possible.

Furthermore, by realization of the optical integrated circuit, genuine light information processing and optical operation to treat information of larger volume than that of an electronic circuit become possible, and realization of the genuine optical computer having the processing speed that is 10000 times or more high speed than an existing electronic computer, can be anticipated.

Example:

In the constitution shown in Fig. 1, the amplifier section 1, the electron emitting section 2, and the electron absorption section 3 are constituted as shown in Figs. 2 and 6, the electron beam transit section 16 is formed with ZnSe, and the optical dielectric waveguide 17 is formed with GaAs. In this constitution, when theoretical analization is performed, it was assumed that with Ve = 2.5 V for the applying voltage (Ve) 8 for the light of wavelength $\lambda$ =1 µm, gain constant g of light becomes $g \geq 540$ cm$^{-1}$ for the element length L of the amplifier section 1 : L = 2.3 µm, and the amplification factor A per one stage becomes 1.13 or more which is obtained from the equation (6), so thac the optical amplifying of 1.13 times or more are realized.

Moreover, when unidirectional optical amplifier of multi-stage construction shown in Fig. 9 was used by utilizing 20 unidirectional optical amplifiers shown in Fig. 1, the amplification factor A of 20 stages of unidirectional optical amplifiers, becomes 11 or more which is obtained from the equation (7), so that the optical amplifying of 11 times or more are realized.

## Claims

1. An unidirectional optical amplifier comprising an optical dielectric waveguide including an amplifier section (1) for amplifying light in one direction by utilizing an energy level of electrons higher than the Fermi level in an emissive section and having high refraction index for leading light through said amplifier section from a light input terminal (4) to a light output terminal (5), and a straight electron beam transit section extended in the electron beam transit direction, and an emissive section (2) for emitting an electron beam in the electron beam transit section and an electron absorption section (3) for absorbing the electron beam travelling through the electron beam transit section, the electron beam transit section being constituted so that effective mass of an electron in the amplifier section becomes small, and the optical dielectric waveguide and the electron beam transit section being arranged in such a manner that the wave number of the light in the amplifier section becomes large and the electric f ield component of the light is generated in the electron beam transit direction so that the electrons emitted by the emissive section (2) impart energy to the light propagating in the amplifying section.

2. An unidirectional optical amplifier as claimed in claim 1, wherein the amplifier section (1) is so constructed that the optical dielectric waveguide is wound on and around the electron beam transit section in spiral.

3. An unidirectional optical amplifier as claimed in claim 1, wherein the amplifier section (1) is so constructed that the optical dielectric waveguide and the electron beam transit section are intersected orthogonally to each other at plural portions.

4. An unidirectional optical amplifier as claimed in claim 1, wherein the amplifier section (1) is so constructed that the optical dielectric waveguide and the electron beam transit section are intersected with the same set angle to each other at plural portions.

5. An unidirectional optical amplifier as claimed in claim 1, wherein the amplifier section (1) is so constructed that the optical dielectric waveguide is arranged in parallel to the electron beam transit section so as to extend the electron beam transit section through the center portion of the optical dielectric waveguide.

6. An unidirectional optical amplifier as claimed in any one of claims 1 to 5, wherein the electron beam transit section is constituted from II-VI group semiconductor such as ZnSe, ZnTe, ZnO, ZnS, CdSe, CdTe, CdS and mixed crystal thereof or an insulating material such as $CaF_2$, $SrF_2$, $BaF_2$ in case of using it for visible-light region from near-infrared region, and from III-V group semiconductor such as InP, InSb, InAs, GaP, GaSb, GaAs and mixed crystal thereof in case of using it for infrared region.

7. An unidirectional optical amplifier as claimed in any one of claims 1 to 5, wherein the optical dielectric waveguide is constituted from II-VI group semiconductor such as ZnSe, ZnTe, ZnO, ZnS, CdSe, CdTe, CdS and mixed crystal thereof or III-V group semiconductor such as GaN, GaP, AlAs and mixed crystal thereof in case of using it for visible-light region from near-infrared region, and from III-V group semiconductors such as InP, InSb, InAs, GaP, GaSb, GaAs and mixed crystal thereof or IV group semiconductor of Si, Ge or the like, in case of using it for infrared region.

8. An unidirectional optical amplifier comprising a multi-stage construction arranged by connecting in cascade several unidirectional optical amplifiers as claimed in any one of claims 1 to 7.

**Patentansprüche**

1. Unidirektionaler optischer Verstärker, umfassend einen optischen dielektrischen Wellenleiter mit einem Verstärkerabschnitt (1) zum Verstärken von Licht in einer Richtung durch Verwenden eines Energieniveaus von Elektronen höher als das Fermi-Niveau in einem Emissionsabschnitt und mit einem hohen Brechungsindex zum Führen von Licht durch den Verstärkerabschnitt von einem Lichteingangsanschluss (4) an einen Lichtausgangsanschluss (5), und einen geraden Elektronenstrahl-Übergangsabschnitt, der in der Elektronenstrahl-Übergangsrichtung verlängert ist, und einen Emissionsabschnitt (2) zum Emittieren eines Elektronenstrahls in dem Elektronenstrahl-Übergangsabschnitt, und einen Elektronen-Absorptionsabschnitt (3) zum Absorbieren des Elektronenstrahls, der durch den Elektronenstrahl-Übergangsabschnitt geht, wobei der Elektronenstrahl-Übergangsabschnitt so ausgebildet ist, dass eine effektive Masse eines Elektrons in dem Verstärkerabschnitt klein wird, und wobei der optische dielektrische Wellenleiter und der Elektronenstrahl-Übergangsabschnitt in einer derartigen Weise angeordnet sind, dass die Wellenzahl des Lichts in dem Verstärkerabschnitt groß wird und die elektrische Feldkomponente des Lichts in dem Elektronenstrahl-Übergangsabschnitt so erzeugt wird, dass die von dem Emissionsabschnitt (2) emittierten Elektronen energetisch auf das Licht einwirken, welches sich in dem Verstärkungsabschnitt ausbreitet.

2. Unidirektionaler optischer Verstärker nach Anspruch 1, wobei der Verstärkerabschnitt (1) so konstruiert ist, dass der optische dielektrische Wellenleiter auf und um den Elektronenstrahl-Übergangsabschnitt in einer Spirale gewickelt ist.

3. Unidirektionaler optischer Verstärker nach Anspruch 1, wobei der Verstärkerabschnitt (1) so konstruiert ist, dass sich der optische dielektrische Wellenleiter und der Elektronenstrahl-Übergangsabschnitt orthogonal zueinander an mehreren Abschnitten schneiden.

4. Unidirektionaler optischer Verstärker nach Anspruch 1, wobei der Verstärkerabschnitt (1) so konstruiert ist, dass sich der optische dielektrische Leiter und der Elektronenstrahl-Übergangsabschnitt unter dem gleichen gesetzten Winkel zueinander an mehreren Abschnitten schneiden.

5. Unidirektionaler optischer Verstärker nach Anspruch 1, wobei der Verstärkerabschnitt (1) so konstruiert ist, dass der optische dielektrische Wellenleiter parallel zu dem Elektronenstrahl-Übergangsabschnitt angeordnet ist, um so den Elektronenstrahl-Übergangsabschnitt durch den Mittenabschnitt des optischen dielektrischen Wellenleiters zu verlängern.

6. Unidirektionaler optischer Verstärker nach irgendeinem der Ansprüche 1 bis 5, wobei der Elektronenstrahl-Übergangsabschnitt aus einem Halbleiter der II-VI Gruppe wie ZnSe, ZnTe, ZnO, ZnS, CdSe, CdTe, CdS und einem gemischten Kristall davon oder einem isolierenden Material wie $CaF_2$, $SrF_2$, $BaF_2$ für den Fall einer Verwendung davon für einen Bereich von sichtbarem Licht von einem Bereich im nahen Infrarot, und aus einem Halbleiter der III-V Gruppe wie InP, InSb, InAs, GaP, GaSb, GaAs und gemischten Kristallen davon für den Fall einer Verwendung davon für einen Infrarot-Bereich gebildet ist.

7. Unidirektionaler optischer Verstärker nach irgendeinem der Ansprüche 1 bis 5, wobei der optische dielektrische Wellenleiter aus einem Halbleiter der II-VI Gruppe wie ZnSe, ZnTe, ZnO, ZnS, CdSe, CdTe, CdS und einem gemischten Kristall davon oder einem Halbleiter der III-V Gruppe wie GaN, GaP, AlAs und einen gemischten Kristall davon für den Fall einer Verwendung davon für einen Bereich von sichtbarem Licht von einem Bereich im nahen Infrarot, und aus Halbleitern der III-V Gruppe wie InP, InSb, InAs, GaP, GaSb, GaAs und einem gemischten Kristall davon oder einem Halbleiter der IV Gruppe von Si, Ge oder dergleichen für den Fall einer Verwendung davon für den Infrarot-Bereich gebildet ist.

8. Unidirektionaler optischer Verstärker, umfassend eine mehrstufige Konstruktion, die dadurch angeordnet wird, dass mehrere unidirektionale optische Verstärker, wie in irgendeinem der Ansprüche 1 bis 7 beansprucht, in Kaskade geschaltet werden.

## Revendications

1. Amplificateur optique unidirectionnel qui comprend un guide d'ondes diélectrique optique qui inclut une section d'amplificateur (1) pour amplifier une lumière suivant une direction en utilisant un niveau d'énergie d'électrons supérieur au niveau de Fermi dans une section d'émission et qui présente un indice de réfraction élevé pour acheminer une lumière au-travers de ladite section d'amplificateur, laquelle lumière provient d'une borne d'entrée de lumière (4), jusqu'à une borne de sortie de lumière (5), et une section de transit de faisceau d'électrons rectiligne qui est étendue suivant la direction de transit de faisceau d'électrons, et une section d'émission (2) pour émettre un faisceau d'électrons dans la section de transit de faisceau d'électrons et une section d'absorption d'électrons (3) pour absorber le faisceau d'électrons qui se déplace au-travers de la section de transit de faisceau d'électrons, la section de transit de faisceau d'électrons étant constituée de telle sorte qu'une masse efficace d'un électron dans la section d'amplificateur devienne faible, et le guide d'ondes diélectrique optique et la section de transit de faisceau d'électrons étant agencés de telle sorte que le nombre d'onde de la lumière dans la section d'amplificateur devienne important et que la composante de champ électrique de la lumière soit générée suivant la direction de transit de faisceau d'électrons de telle sorte que les électrons qui sont émis par la section d'émission (2) impriment une énergie à la lumière qui se propage sur la section d'amplification.

2. Amplificateur optique unidirectionnel selon la revendication 1, dans lequel la section d'amplificateur (1) est construite de telle sorte que le guide d'ondes diélectrique optique soit enroulé sur la section de transit de faisceau d'électrons en spirale et autour de celle-ci.

3. Amplificateur optique unidirectionnel selon la revendication 1, dans lequel la section d'amplificateur (1) est construite de telle sorte que le guide d'ondes diélectrique optique et la section de transit de faisceau d'électrons s'intersectent orthogonalement l'un l'autre au niveau de plusieurs parties.

4. Amplificateur optique unidirectionnel selon la revendication 1, dans lequel la section d'amplificateur (1) est construite de telle sorte que le guide d'ondes diélectrique optique et la section de transit de faisceau d'électrons s'intersectent l'un l'autre moyennant le même angle établi au niveau de plusieurs parties.

5. Amplificateur optique unidirectionnel selon la revendication 1, dans lequel la section d'amplificateur (1) est construite de telle sorte que le guide d'ondes diélectrique optique soit agencé en parallèle à la section de transit de faisceau d'électrons de manière à étendre la section de transit de faisceau d'électrons au-travers de la partie centrale du guide d'ondes diélectrique optique.

6. Amplificateur optique unidirectionnel selon l'une quelconque des revendications 1 à 5, dans lequel la section de transit de faisceau d'électrons est constituée à partir d'un semiconducteur du groupe II-VI tel que ZnSe, ZuTe, ZnO, ZnS, CdSe, CdTe, CdS et un cristal mixte afférent ou à partir d'un matériau isolant tel que $CaF_2$, $SrF_2$, $BaF_2$ dans le cas de son utilisation pour une région de lumière visible à partir de la région des infrarouges proches et à partir d'un semiconducteur du groupe III-V tel que InP, InSb, InAs, GaP, GaSb, GaAs et un cristal mixte afférent dans le cas de son utilisation pour une région des infrarouges.

7. Amplificateur optique unidirectionnel selon l'une quelconque des revendications 1 à 5, dans lequel le guide d'ondes diélectrique optique est constitué à partir d'un semiconducteur du groupe II-VI tel que ZnSe, ZnTe, ZnO, ZnS, CdSe, CdTe, CdS et un cristal mixte afférent ou à partir d'un semiconducteur du groupe III-V tel que GaN, GaP, AlAs et un cristal mixte afférent dans le cas de son utilisation pour une région de lumière visible à partir de la région des infrarouges proches et à partir de semiconducteurs du groupe III-V tels que InP, InSb, InAs, GaP, GaSb, GaAs et un cristal mixte afférent ou à partir d'un semiconducteur du groupe IV tel que Si, Ge ou similaire dans le cas de son utilisation pour la région des infrarouges.

8. Amplificateur optique unidirectionnel comprenant une construction à multiples étages qui est agencée en connectant en cascade plusieurs amplificateurs optiques unidirectionnels tels que revendiqués selon l'une quelconque des revendications 1 à 7.

## FIG_ 1

FIG.2

FIG_3

EP 0 867 987 B1

# FIG_4

EP 0 867 987 B1

# FIG_5

## FIG_6a

## FIG_6b

## FIG. 7a

## FIG. 7b

# FIG_8a

# FIG_8b

19

EP 0 867 987 B1

# FIG. 9